# EUROPEAN PATENT SPECIFICATION

(11) **EP 2 418 130 B1**
(45) Date of publication and mention of the grant of the patent: **22.01.2014**
(21) Application number: 11175602.9
(22) Date of filing: 27.07.2011
(51) Int. Cl.: B60R 25/04, E05B 19/04, G07C 9/00

(54) **Electronic key with remote control for vehicle**
Elektronischer Schlüssel mit Fernbedienung für Fahrzeuge
Clé électronique avec télécommande pour véhicule

(30) Priority: 10.08.2010 SE 1050846
(43) Date of publication of application: 15.02.2012
(73) Proprietor: Scania CV AB (publ), 151 87 Södertälje (SE)
(72) Inventor: Lundin, Michael, SE-121 33 ENSKEDEDALEN (SE); Svensson, Emma, SE-151 38 SÖDERTÄLJE (SE)

(56) References cited:
- WO-A1-99/10209
- FR-A1- 2 801 919
- US-B1- 6 386 007

## Description

### TECHNICAL FIELD

The present invention relates to ignition keys provided with remote controls for use in vehicles. The invention relates more specifically to an ignition key device by which the vehicle's engine can be started and which can also be used to operate wirelessly various functions in the vehicle, e.g. switching alarms on and off, applying and releasing central locking etc., and which integrates these functions in a single unit. The invention is particularly intended for use in heavy commercial vehicles, e.g. trucks, buses etc.

### STATE OF THE ART

The starting and stopping of vehicle engines has long been by means of some kind of electrical ignition lock. A conventional ignition key is usually provided with a blade (stem) and a bow (handgrip). It has become increasingly usual in recent years to incorporate in the key electronic and wireless immobilisers, i.e. a function which makes it impossible to start the vehicle unless an electronically stored code in the key corresponds to a pre-programmed code in the vehicle's ignition system. This makes it significantly more difficult to counterfeit ignition keys and to steal the vehicle.

It is also increasingly usual to use bladeless ignition keys in the form of an entirely electronic key which can be inserted in, docked with, an appropriately configured ignition lock unit situated in the vehicle, preferably in its instrument panel. In the state of the art, this electronic key is combined with a remote control by which it is possible to control various functions in the vehicle, e.g. its central locking, alarm system, lighting, rear hatch, panel alarm etc. All of these functions previously controlled by two or more units are thus now integrated in a single unit affording inter alia the advantage of occupying less pocket space. It is also easier for the user to keep track of one unit than two or more. User convenience and security against break-ins and theft are thus enhanced.

This type of system is also used increasingly for heavy commercial vehicles, but using a single unit leads to certain handling problems. It is for example usual for drivers of at least certain types of heavy vehicles to have to leave the vehicle with the engine running so that various types of equipment can be operated by means of the vehicle's power take-off. The driver may for example wish to run hydraulic, mechanical or electrical systems such as pumps, lifting systems, rotating devices or other equipment while at the same time having to supervise and control these devices from outside the vehicle and therefore having to leave the cab with the engine running. The driver moving a shorter or longer distance away from the cab increases risk of theft of the vehicle or at least of objects stored in the cab. This is an obvious risk and thefts of whole vehicles have occurred despite the driver being in the immediate vicinity. There is therefore a great need for the driver to be able to lock the cab but still be able to leave the engine running. Known solutions are such that the remote control and hence the ignition key have to be taken out of the cab to allow the cab to be locked, which means that the engine has to be shut down when the driver leaves the cab.

Using respective separate ignition key and remote control units has of course long been a known practice and other solutions have also been proposed for preventing theft of a vehicle when a driver leaves it with the engine running.

FR 2 801 919 describes a device according to the preamble of claim 1.

WO99/10209 describes another device for preventing theft when the driver temporarily leaves the vehicle. This device comprises a passive unit which the driver has always to take with him/her, and an active unit fitted/situated in the vehicle. The active and passive units are in mutual wireless communication so long as they are within a certain distance from one another. The driver moving away beyond the range of the active unit is detected, resulting in one or more responses, e.g. locking of the vehicle's cab doors or cargo doors and/or activation of its alarm system. This solution is particularly intended for vehicles which come to a halt often, e.g. to load or unload goods, i.e. occasions on which the driver wishes for reasons of convenience to keep the engine running. A disadvantage of this solution is that the driver has always to take with him/her an extra unit. Another example is the driver's limited scope for directly controlling the functions of the system and the vehicle, e.g. for ensuring that the cab doors are locked even when he/she is near to the vehicle but perhaps on the other side of it.

The state of the art within this field therefore does not solve the problem of indicating a device which is easy to handle, comprises as small a number of units as possible, enables the driver to be outside the vehicle's cab and leave the engine running and at the same time affords such flexibility that he/she can control various functions in the vehicle, e.g. whether the cab is or is not to be kept locked or whether the vehicle's alarm is or is not to be activated by one and the same key device.

### SUMMARY OF THE INVENTION

An object of the invention is to solve the above problems by proposing a key device which allows the vehicle's engine to be kept running while at the same time the driver leaves the cab, and which allows him/her to remote-control certain functions in the vehicle, e.g. the cab's door locks and/or alarm system, at a distance from the vehicle, and thereby prevent or hinder theft of the vehicle.

A further object of the invention is that the key device should be convenient for the driver to handle.

A further object of the invention is that the key device should be simple in construction and function.

A further object of the invention is that the solution should be safe, inexpensive to manufacture and easy to use.

These and further objects and advantages are achieved according to the invention by a device defined by the features indicated in the characterising part of the independent claim 1.

The present invention thus relates to a key device by which a vehicle's engine can be controlled, started or shut down, and one or more other functions in the vehicle can be remote-controlled. The key device comprises inter alia an immobiliser function to render the vehicle difficult to steal, and a remote control unit by which the driver can wirelessly control, for example, the vehicle's central locking or alarm system. The key device integrates physically/mechanically the electronic ignition key and the wireless remote control in a single unit which can be inserted in, docked with, the vehicle's ignition lock unit which is preferably situated in the vehicle's instrument panel, e.g. close to the steering wheel. To allow the driver to safely leave the vehicle's cab with the engine running, the key device is arranged to make it possible by a simple hand movement to separate at least an ignition key element and a remote control element so that the ignition key element, with the integrated immobiliser, can be left in the ignition lock unit in order to allow the engine to run while at the same time the driver can take the remote control out of the cab with him/her and control desired functions. The ignition key element and the remote control element can be reintegrated to form a single physical/mechanical unit, e.g. when the driver returns to the cab or there is no need to keep the engine running.

The ignition key device according to the invention enhances substantially the driver's convenience and reduces the risk of loss of the ignition key or the remote control and at the same time minimises the risk of the vehicle being stolen or the cab being broken into.

Further features and advantages of the invention are indicated by the more detailed description of it set out below and the accompanying drawings and other claims.

### BRIEF LIST OF DRAWINGS

The invention is described below in the form of some preferred embodiment examples with reference to the attached drawings.
**Figure 1** depicts a view of a key device according to the invention for a vehicle, comprising a remote control element and an ignition key element with immobiliser.
**Figure 2** depicts a view of the invention according to Figure 1 in a first separation state in which the remote control element and the ignition key element are partly separated.
**Figure 3** depicts a view of the invention according to Figures 1 and 2 in a second separation state in which the remote control element and the ignition key element are wholly separated.
**Figure 4** depicts a view of an ignition key device according to the invention according to Figures 1-3 when about to be inserted in an ignition lock unit which is preferably situated in the vehicle's instrument panel.
**Figure 5** depicts a view of an ignition key device according to the invention inserted into and mechanically locked in the vehicle's ignition lock unit.
**Figure 6** depicts a view of a key device according to the invention divided so that the remote control element is released from the ignition key element and its immobiliser.

### DESCRIPTION OF PREFERRED EMBODIMENTS

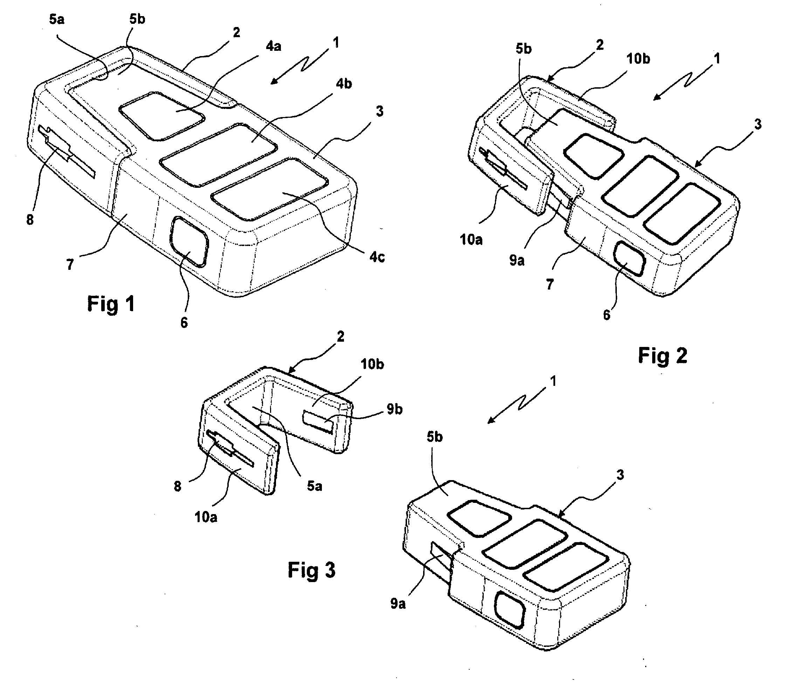

**Figure 1** depicts an ignition key device 1 according to the invention for a vehicle, comprising an ignition key element 2 which comprises an immobiliser unit (not depicted) and a remote control element 3 with switches 4a-c, inter alia for operating the vehicle's central locking and alarm system. The ignition key element 2 and the remote control element 3 are here physically/mechanically connected together and locked to one another, constituting an integrated unit, an ignition key device 1, which is easy for the user to take with him/her. In terms of size, the ignition key device 1 may be quite small and configured for fastening to a keying or the like.

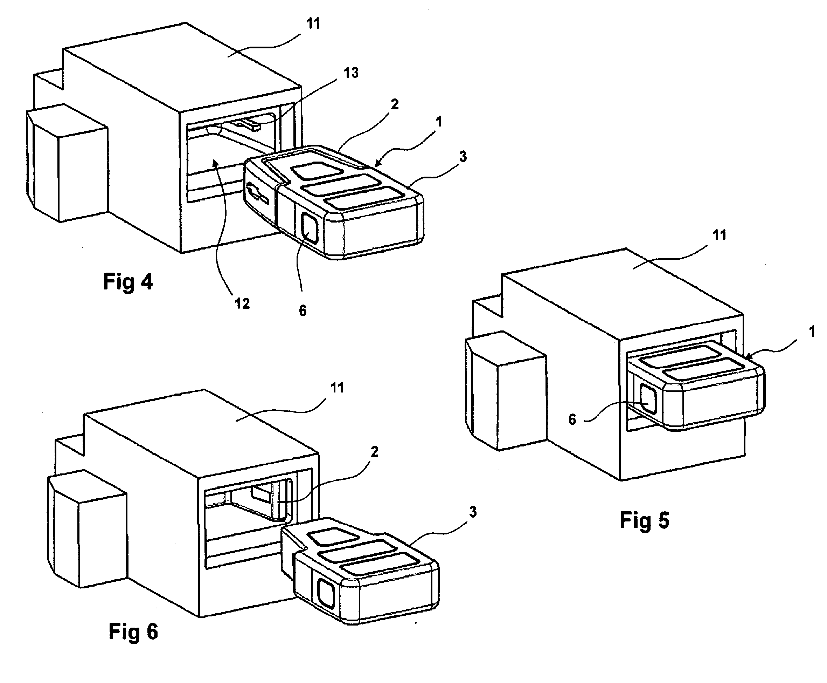

The ignition key element 2 and the remote control element 3 in an embodiment example take the form of a female element 5a and a male element 5b such that the remote control element 3 can be pushed into the ignition key element 2 and locked by a snap device or a latching device (not depicted) operable by means of one or more mechanical operating means 6 or buttons, preferably situated on the lateral edges 7 of the remote control element 3. On the lateral edges of the ignition key element 2 there is a first pair of locking means 8 to allow releasable locking to an ignition lock unit or docking unit situated in the vehicle (see Figure 4). The housing of the ignition key device 1 may with advantage be made of a lightweight plastic material and is in principle provided with gently rounded corners and sides.

**Figure 2** depicts the ignition key device 1 according to Figure 1 but in a first separation state in which the ignition key element 2 and the remote control element 3 are divided/disconnected from one another and drawn somewhat apart. The ignition key element 2 has a U shape as seen from above and constitutes a female element 5a, whereas the remote control element 3 is provided with a male element 5b. A second locking means 9a,b is provided to hold the ignition key element 2 and the remote control element 3 together and might be situated on the sides of the male element 5b and on the inside of the limbs 10a,b of the ignition key element 2, and this second locking means 9a might be operated by means of push-buttons 6 situated on the lateral edges 7 of the remote control element 3. This second locking means 9a,b might of course be configured in some other way and might for example take the form of a stud (not depicted) which protrudes from one of the elements 2,3 of the ignition key device 1 and fits into and is locked in a recess in the other element 2,3.

**Figure 3** depicts the ignition key device 1 according to Figures 1 and 2 in a wholly separated state. The electronic circuits of the remote control element 3 receive their power supply from one or more batteries (not depicted) situated inside this element, whereas the immobiliser circuit of the ignition key element 2 receives its power supply wirelessly when the ignition key element 2 is docked in the ignition lock unit (see Figure 4). The ignition key element 2 is provided with locking means 8,9b respectively situated on the outside of the U-shaped element for locking to the ignition lock unit and on the inside of the U-shaped element for locking to the remote control element 3.

**Figure 4** depicts the ignition lock unit 11 or docking unit, and the ignition key device 1 according to the invention. The ignition lock unit 11 is provided with a cavity 12 which caters for insertion of at least part of the ignition key device 1, and the diagram also shows the ignition key device 1 about to be inserted in this cavity 12 in the ignition lock unit 11, which is preferably situated in the vehicle's instrument panel (not depicted). Locking means 13, e.g. in the form of latching hooks, are situated inside the ignition lock unit's cavity 12 to allow firm mechanical locking of, in particular, the ignition key element 2 of the ignition key device. The locking means 13 may function in such a way that a first pushing in of the ignition key device 1 activates the mechanical locking means 13, a second pushing in of the ignition key device 1 deactivates the locking means 13, and the ignition key device 1 is then pushed out of the docking device 11 by, for example, a spring (not depicted) and can then easily be pulled out completely and taken away by the user/driver.

**Figure 5** depicts the ignition key device 1 fully inserted in the ignition lock unit 11. In this situation the ignition key element 2 is mechanically locked in the ignition lock unit 11 and the immobiliser circuit is energised and activated, making it possible to start the vehicle's engine. The operating means 6 for separating the remote control element 3 from the ignition key element 2 is also accessible in this situation.

**Figure 6** shows the remote control element 3 released from the ignition key element 2 and the ignition lock unit 11, e.g. by pressing in of the operating means 6. In this situation, the ignition key element 2 thus remains in the ignition lock unit 11, allowing the engine to continue to run while the driver can take the remote control element 3 out of the vehicle and can for example then remote-control, activate, the vehicle's central locking, alarm system etc.

The above description is primarily intended to facilitate comprehension of the invention and is of course not restricted to the embodiments indicated, since other variants of the invention are also possible and conceivable within the scope of the inventive concept and within the protective scope of the claims set out below.

## Claims

1. An ignition key device (1) intended for a vehicle's engine starting function and for wireless control of one or more other functions in the vehicle, comprising an electronic ignition key function with immobiliser, and a remote control function, which ignition key device (1) is
physically/mechanically divisible into at least an ignition key element (2) and a remote control element (3) which in their docked state are mechanically locked to one another by locking means (9a,b) and thus constitute an integrated unit, whereby
the locking means (9a) can be operated via one or more operating means (6) situated on lateral edges of the ignition key device (1),
**characterised in that** the ignition key element (2) is provided with outer locking means (8) by which the ignition key element (2) can be releasably locked firmly in the vehicle's ignition lock unit (11).

2. An ignition key device (1) according to claim 1,
**characterised**
**in that** one portion of the locking means (9a) is situated on the sides of the remote control element (3).

3. An ignition key device (1) according to any one of the foregoing claims,
**characterised**
**in that** the locking means (9a,b) comprise a latching mechanism.

4. An ignition key device (1) according to any one of the foregoing claims,
**characterised**
**in that** the ignition key element (2) and the remote control element (3) take the form of a female element (5a) and a male element (5b), one of which can be pushed into the other, e.g. the remote control element (3) can be pushed into the ignition key element (2).

5. An ignition key device (1) according to any one of the foregoing claims,
**characterised**
**in that** the remote control element (3) is provided with switches (4a-c) to operate various functions in the vehicle, e.g. the vehicle's central locking, alarm system etc.

6. An ignition key device (1) according to any one of the foregoing claims,
**characterised**
**in that** the ignition key element (2) comprises an immobiliser circuit.

7. An ignition key device (1) according to any one of the foregoing claims,
**characterised**
**in that** the ignition key element (2) is U-shaped.

8. A vehicle, in particular a truck,
**characterised**
**in that** it is provided with a device according to any one of claims 1-7.

## Patentansprüche

1. Zündschlüsselvorrichtung (1), die für eine Motorstartfunktion eines Fahrzeugs und zum kabellosen Steuern einer oder mehrerer anderer Funktionen im Fahrzeug vorgesehen ist, umfassend eine elektronische Zündschlüsselfunktion mit Wegfahrsperre und eine Fernsteuerfunktion, wobei die Zündschlüsselvorrichtung (1) physisch/mechanisch in wenigstens ein Zündschlüsselelement (2) und ein Fernsteuerelement (3) teilbar ist, die in ihrem gekoppelten Zustand über Verriegelungsmittel mechanisch miteinander verriegelt sind und somit eine integrierte Einheit bilden, wobei das Verriegelungsmittel (9a) mittels einem oder mehreren Bedienungsmitteln (6) bedient werden kann, die an seitlichen Rändern der Zündschlüsselvorrichtung (1) angeordnet sind,
**dadurch gekennzeichnet, dass** das Zündschlüsselelement (2) mit einem äußeren Verriegelungsmittel (8) ausgebildet ist, mit der das Zündschlüsselelement (2) lösbar in der Zündschlosseinheit (11) des Fahrzeugs fest verriegelt werden kann.

2. Zündschlüsselvorrichtung (1) gemäß Anspruch 1,
**dadurch gekennzeichnet, dass** ein Abschnitt des Verriegelungsmittels (9a) an den Seiten des Fernsteuerelements (3) angeordnet ist.

3. Zündschlüsselvorrichtung (1) gemäß einem der vorangehenden Ansprüche,
**dadurch gekennzeichnet, dass** das Verriegelungsmittel (9a, b) einen Einrastmechanismus umfasst.

4. Zündschlüsselvorrichtung (1) gemäß einem der vorangehenden Ansprüche,
**dadurch gekennzeichnet, dass** das Zündschlüsselelement (2) und das Fernsteuerelement (3) als ein aufnehmendes Element (5a) und ein vorspringendes Element (5b) ausgebildet sind, wobei eines in das andere eingeschoben werden kann, zum Beispiel, wobei das Fernsteuerelement (3) in das Zündschlüsselelement (2) eingeschoben werden kann.

5. Zündschlüsselvorrichtung (1) gemäß einem der vorangehenden Ansprüche,
**dadurch gekennzeichnet, dass** das Fernsteuerelement (3) Schalter (4a-c) aufweist, um verschiedene Funktionen im Fahrzeug zu bedienen, beispielsweise die Zentralverriegelung des Fahrzeugs, das Alarmsystem, etc.

6. Zündschlüsselvorrichtung (1) gemäß einem der vorangehenden Ansprüche,
**dadurch gekennzeichnet, dass** das Zündschlüsselelement (2) eine Wegfahrsperrenschaltung umfasst.

7. Zündschlüsselvorrichtung (1) gemäß einem der vorangehenden Ansprüche,
**dadurch gekennzeichnet, dass** das Zündschlüsselelement (2) U-förmig ist.

8. Fahrzeug, insbesondere ein Lastkraftwagen,
**dadurch gekennzeichnet, dass** es mit einer Vorrichtung gemäß einem der Ansprüche 1 bis 7 ausgebildet ist.

## Revendications

1. Dispositif de clé de contact (1) destiné à une fonction de démarrage de moteur de véhicule et à la commande sans fil d'une ou de plusieurs autres fonctions dans le véhicule, comprenant une fonction de clé de contact électronique avec anti-démarrage, et une fonction de télécommande, lequel dispositif de clé de contact (1) peut être divisé physiquement ou mécaniquement en au moins un élément formant clé de contact (2) et un élément formant télécommande (3) qui, dans leur état emboîté, sont verrouillés mécaniquement l'un à l'autre par des moyens de verrouillage (9a, b) et constituent ainsi une unité intégrée, dans lequel les moyens de verrouillage (9a) peuvent être actionnés par un ou plusieurs moyens de commande (6) situés sur des bords latéraux du dispositif de clé de contact (1), **caractérisé en ce que** l'élément formant clé de contact (2) est équipé de moyens de verrouillage extérieurs (8) par lesquels l'élément formant clé de contact (2) peut être verrouillé fermement de façon amovible dans l'unité de serrure de contact (11) du véhicule.

2. Dispositif de clé de contact (1) selon la revendication 1, **caractérisé en ce qu'**une partie des moyens de verrouillage (9a) est située sur les côtés de l'élément formant télécommande (3).

3. Dispositif de clé de contact (1) selon l'une quelconque des revendications précédentes, **caractérisé en ce que** les moyens de verrouillage (9a, b) comprennent un mécanisme d'encliquetage.

4. Dispositif de clé de contact (1) selon l'une quelconque des revendications précédentes, **caractérisé en ce que** l'élément formant clé de contact (2) et l'élément formant télécommande (3) revêtent la forme d'un élément femelle (5a) et d'un élément mâle (5b) dont l'un peut être enfoncé dans l'autre, par exemple, l'élément formant télécommande (3) peut être enfoncé dans l'élément formant clé de contact (2).

5. Dispositif de clé de contact (1) selon l'une quelconque des revendications précédentes, **caractérisé en ce que** l'élément formant télécommande (3) est muni d'interrupteurs (4a-c) pour commander différentes fonctions dans le véhicule, par exemple un verrouillage centralisé du véhicule, un système d'alarme, etc.

6. Dispositif de clé de contact (1) selon l'une quelconque des revendications précédentes, **caractérisé en ce que** l'élément formant clé de contact (2) comprend un circuit d' anti-démarrage.

7. Dispositif de clé de contact (1) selon l'une quelconque des revendications précédentes, **caractérisé en ce que** l'élément formant clé de contact (2) est en forme de U.

8. Véhicule, en particulier camion, **caractérisé en ce qu'**il est équipé d'un dispositif selon l'une quelconque des revendications 1 à 7.
